# EUROPÄISCHE PATENTANMELDUNG

(11) **EP 2 410 036 A1**
(43) Veröffentlichungstag der Anmeldung: **25.01.2012**
(21) Anmeldenummer: 11169216.6
(22) Anmeldetag: 09.06.2011
(51) Int. Cl.: C10B 53/07, C10B 47/06, B29B 17/02, D01F 9/12, F02G 3/02

(54) **Verfahren und Vorrichtung zur Weiterverwendung von Kunstharz- und Kohlenstofffasern- enthaltender Abfälle**

(30) Priorität: 21.07.2010 DE 102010031602
(71) Anmelder: Bayerische Motoren Werke Aktiengesellschaft, 80809 München (DE)
(72) Erfinder: Boes, Jörn, 84030 Ergolding (DE); Wolf, Johann, 85662 Hohenbrunn (DE)

(57) **Zusammenfassung**

Die Erfindung betrifft ein Verfahren zur Weiterverwendung von Kunstharz- und Kohlenstofffasern-enthaltender Abfälle (A), welches zumindest die folgenden Schritte aufweist:
- Zuführen der Abfälle (A) zu einem Pyrolyse- und/oder Vergasungsprozess (20, 21), in dem das enthaltene Kunstharz zumindest teilweise in eine gasförmige Phase (G) überführt wird; und
- energetische Nutzung der gasförmigen Phase (G) zur Erzeugung von elektrischer Energie.

Die Erfindung betrifft ferner eine Vorrichtung zur Durchführung dieses Verfahrens.

## Beschreibung

Die Erfindung betrifft ein Verfahren und eine Vorrichtung zur Weiterverwendung von Kunstharz- und Kohlenstofffasern-enthaltender Abfälle.

Bei der Herstellung von Bauteilen aus kohlenstofffaserverstärkten Kunststoffen (CFK) fallen Kunstharz- und Kohlenstofffasern-enthaltende Abfälle an, die entsorgt werden müssen. Auch die hergestellten Bauteile selbst werden bei Beschädigung oder beim Erreichen des Produktlebensendes (EOL) zu Abfall und müssen entsorgt werden. Selbiges gilt auch für Fehlchargen.

Die Entsorgung von Kunstharz- und Kohlenstofffasern-enthaltender Abfälle wird heute üblicherweise durch Verbrennung in Müllverbrennungsanlagen realisiert, da eine Deponierung in vielen Fällen nicht zulässig ist. Eine derartige Entsorgung scheint jedoch insbesondere im Kraftfahrzeugbau wegen des steigenden Aufkommens von Bauteilen aus solchen kohlenstofffaserverstärkten Kunststoffen bedenklich, zumal sowohl gegenwärtig als auch zukünftig hohe Verwertungsquoten fürAltfahrzeuge gelten. In der aktuellen DE 10 2008 002 846 A1 ist eine Möglichkeit zum Recyceln der in diesen Abfällen enthaltenen Kohlenstofffasern beschrieben.

Eine Aufgabe der Erfindung ist es, neue Möglichkeiten zur Weiterverwendung von Kunstharz- und Kohlenstofffasern-enthaltender Abfälle aufzuzeigen.

Diese Aufgabe wird gelöst durch ein erfindungsgemäßes Verfahren mit den Merkmalen des Anspruchs 1. Weiterbildungen und Ausgestaltungen des erfindungsgemäßen Verfahrens sind in den abhängigen Ansprüchen angegeben. Gemäß dem nebengeordneten Anspruch erstreckt sich die Lösung der Aufgabe auch auf eine Vorrichtung zur Durchführung des erfindungsgemäßen Verfahrens.

Das erfindungsgemäße Verfahren dient der Weiterverwendung von Kunstharz- und Kohlenstofffasern-enthaltender Abfälle. Es umfasst zumindest die folgenden Schritte:
- Zuführen der Abfälle zu einem Pyrolyse- und/oder Vergasungsprozess, in dem das in diesen Abfällen enthaltene Kunstharz zumindest teilweise in eine gasförmige Phase überführt wird; und
- energetische Nutzung der gewonnenen gasförmigen Phase zur Erzeugung von elektrischer Energie.

Im Rahmen der Erfindung sind Kunstharz- und Kohlenstofffasern-enthaltende Abfälle insbesondere Reste, die bei der Herstellung von Bauteilen aus kohlenstofffaserverstärkten Kunststoffen (CFK) anfallen. Solche Reste sind z. B. Schnittabfälle, die mit Kunstharz (Epoxidharz, Polyesterharz, Phenolharz, etc.; gegebenenfalls zuzüglich einem Bindermaterial) getränkt und gegebenenfalls auch ausgehärtet sind. Die Kohlenstofffasern liegen hierbei z. B. in Form von Geweben oder sonstigen faserhaltigen Halbzeugen vor. Abfälle im Sinne der Erfindung können aber auch bei der Herstellung solcher Bauteile anfallende Fehlchargen sein, oder aber auch die hergestellten Bauteile (bzw. Halbzeuge oder dergleichen) selbst, wie eingangs erläutert.

Insbesondere ist vorgesehen, dass es sich bei den Kunstharz- und Kohlenstofffasern-enthaltenden Abfällen um CFK-Fahrzeugteile und insbesondere um CFK-Karosseriebauteile handelt, oder dass es sich um Reste handelt, die bei der Herstellung dieser CFK-Teile anfallen.

Unter einem Pyrolyseprozess wird eine thermo-chemische Spaltung des in den Abfällen enthaltenen Kunstharzes verstanden, bei der wenigstens ein Bestandteil des Kunstharzes in einen gasförmigen Stoff überführt wird. Bevorzugt ist vorgesehen, dass der Pyrolyseprozess in einer sauerstofffreien Atmosphäre und/oder in einer Schutzgasatmosphäre stattfindet. Unter einem Vergasungsprozess wird die einfache chemisch-physikalische Überführung wenigstens eines Bestandteils des Kunstharzes in einen gasförmigen Stoff verstanden. Der Pyrolyse- und/oder Vergasungsprozess findet in einer Pyrolyse- und/oder Vergasungskammer oder dergleichen statt (im folgenden nur als Pyrolysekammer bezeichnet). Die aus der Pyrolysekammer austretende gasförmige Phase kann eine Temperatur von bis zu mehreren Hundert Grad Celsius aufweisen (z. B. 400° C bis 800° C). Der Pyrolyseprozess soll so geführt sein, dass nur wenig oder kein Pyrolysekoks anfällt.

Ein wesentlicher Aspekt der Erfindung ist die zumindest teilweise energetische Nutzung der im Pyrolyseprozess und/oder Vergasungsprozess gewonnenen gasförmigen Phase zur Erzeugung von elektrischer Energie, wodurch neue Möglichkeiten zur Weiterverwendung von Kunstharz- und Kohlenstofffasern-enthaltender Abfälle gegeben sind, die über eine bloße stoffliche Verwertung hinausgehen.

Bevorzugt ist vorgesehen, dass die nach dem erfindungsgemäßen Verfahren erzeugte bzw. durch Umwandlung gewonnene elektrische Energie direkt genutzt wird, bspw. zur Energieversorgung von Einrichtungen, die zur Durchführung des erfindungsgemäßen Verfahrens betrieben werden (bspw. eine Schreddereinrichtung). Alternativ kann die erzeugte elektrische Energie jedoch auch in ein Hausstromnetz oder in ein öffentliches Stromnetz (Abverkauf) eingespeist werden. Ferner kann die erzeugte elektrische Energie aber auch für andere Zwecke in Akkumulatoren oder dergleichen gespeichert werden.

Bevorzugt ist vorgesehen, dass die im Pyrolyse- und/oder Vergasungsprozess gewonnene gasförmige Phase zumindest teilweise einem Verbrennungsprozess zugeführt wird, um einen latenten Brennwert nutzbar zu machen, der der gasförmigen Phase innewohnt. Ein solcher Verbrennungsprozess erfolgt in einer Verbrennungseinrichtung. Die Zuführung der gasförmigen Phase zur Verbrennungseinrichtung erfolgt durch eine Rohrleitung oder dergleichen.

Bevorzugt ist vorgesehen, dass die im Pyrolyse- und/oder Vergasungsprozess gewonnene gasförmige Phase und/oder die Abgase des Verbrennungsprozesses wenigstens einer Wärmetauscheinrichtung (Wärmetauscher) zugeführt werden, in der die in der gasförmigen Phase und/oder in den Abgasen enthaltene Wärme an ein Wärmetauschmedium übertragen wird. Die Idee hierbei ist, die in der gasförmigen Phase und/oder in den Abgasen enthaltene Wärme nicht direkt, sondern indirekt durch Übertragung an ein Wärmetauschmedium nutzbar zu machen. Alternativ und/oder ergänzend besteht natürlich auch die Möglichkeit, die in der gasförmigen Phase und/oder in den Abgasen enthaltene Wärme direkt nutzbar zu machen.

Bevorzugt ist vorgesehen, dass die in der gasförmigen Phase und/oder in den Abgasen enthaltene Wärme, und insbesondere die an ein Wärmetauschmedium übertragene Wärme, zumindest teilweise zur Aufrechterhaltung und/oder zur Regelung des Pyrolyse- und/oder Vergasungsprozesses verwendet wird. Bspw. kann dies durch ein Rohrleitungssystem erfolgen, das die Pyrolysekammer umgibt und durch welches zumindest ein Teil der gasförmigen Phase, der Abgase und/oder des Wärmetauschmediums geleitet wird, um die zur Aufrechterhaltung des Pyrolyseprozesses erforderliche Wärmemenge extern zuzuführen und/oder um den Pyrolyseprozess hierdurch zu regeln.

Bevorzugt ist vorgesehen, dass die in der gasförmigen Phase und/oder in den Abgasen enthaltene Wärme, und insbesondere die an ein Wärmetauschmedium übertragene Wärme, zumindest teilweise in elektrische Energie gewandelt wird. Dies erfolgt durch eine Stromerzeugungseinrichtung. Insbesondere ist hierbei vorgesehen, dass die in der gasförmigen Phase und/oder in den Abgasen der Verbrennung enthaltene Wärme, und insbesondere die an ein Wärmetauschmedium übertragene Wärme, zum Antrieb eines Stirlingmotors verwendet wird, der wiederum einen Generator antreibt. Alternativ und/oder ergänzend besteht natürlich auch die Möglichkeit, die gasförmige Phase und/oder die Abgase, und insbesondere das Wärmetauschmedium, zum Antrieb einer Turbine oder dergleichen zu verwenden, wobei die Turbine wiederum einen Generator antreibt. In beiden Fällen erfolgt die energetische Nutzung mittelbar über den Umweg der Energiewandlung von thermischer Energie in mechanische Energie. Alternativ ist es auch möglich, Thermoelemente oder dergleichen einzusetzen, um die in der gasförmigen Phase und/oder in den Abgasen enthaltene Wärme, und insbesondere die an ein Wärmetauschmedium übertragene Wärme, zumindest teilweise unmittelbar in elektrische Energie zu wandeln.

Bevorzugt ist vorgesehen, dass der Pyrolyse- und/oder Vergasungsprozess stabil geführt wird und dass ein Niederschlag (Kondensation) der gasförmigen Phase, oder einzelner Bestandteile hiervon, in den von der Pyrolysekammer abführenden Rohrleitungen verhindert wird. Sowohl die stabile Führung als auch die Verhinderung eines Niederschlags kann z. B. durch eine entsprechende Regelung des Pyrolyse-und/oder Vergasungsprozesses bewerkstelligt werden, wozu auf die vorausgehenden Erläuterungen verwiesen wird. Alternativ und/oder ergänzend ist es z. B. auch möglich, die abführenden Rohrleitungen zu isolieren und/oder aktiv zu beheizen, um Niederschläge zu verhindern. Eine aktive Beheizung kann z. B. mittels der Abgase erfolgen, die bei der Verbrennung der gasförmigen Phase entstehen. Zur stabilen Führung des Pyrolyse- und/oder Vergasungsprozesses, sowie zur Verhinderung eines Niederschlags, ist insbesondere auch eine Steuereinrichtung (einschl. Sensoren und Stellmittel) vorgesehen.

Bevorzugt ist vorgesehen, dass die in den Abfällen enthaltenen Kohlenstofffasern rückgewonnen werden und somit für eine erneute Verarbeitung, bspw. zur Herstellung faserverstärkter Spritzgussteile, zur Verfügung stehen (Recycling der Kohlenstofffasern). Die Rückgewinnung erfolgt durch eine entsprechende Rückgewinnungseinrichtung,

Die erfindungsgemäße Vorrichtung dient der Durchführung des erfindungsgemäßen Verfahrens. Diese Vorrichtung umfasst zumindest wenigstens eine Einrichtung zum Ausführen eines Pyrolyse- und/oder Vergasungsprozesses und wenigstens eine Einrichtung zur Erzeugung von elektrischer Energie unter energetischer Nutzung der im Pyrolyse- und/oder Vergasungsprozess gewonnenen gasförmigen Phase. Die jeweiligen Einrichtungen können aus diversen Einzeleinrichtungen (Komponenten) bestehen. Für die erfindungsgemäße Vorrichtung gelten analog die im Zusammenhang mit dem erfindungsgemäßen Verfahren erläuterten Weiterbildungen und Ausgestaltungen. Auch die übrigen Erläuterungen gelten sinngemäß.

Die Erfindung wird nachfolgend anhand der Figuren beispielhaft näher erläutert. Es zeigen schematisch:
- Fig. 1: ein erstes Ausführungsbeispiel einer erfindungsgemäßen Vorrichtung; und
- Fig. 2: ein zweites Ausfiührungsbeispief einer erfindungsgemäßen Vorrichtung.

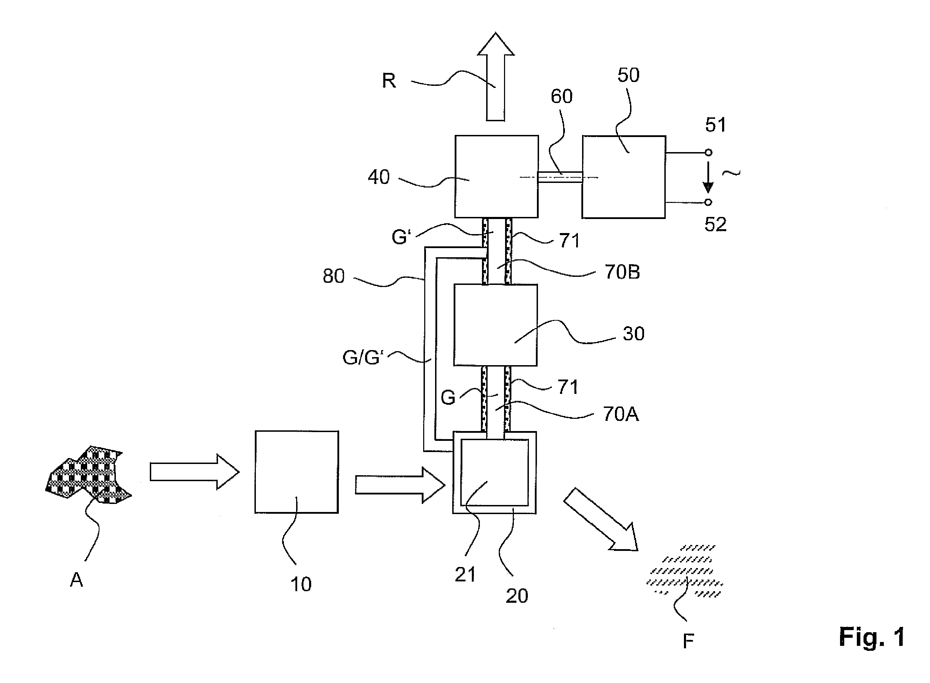

**Fig. 1** zeigt eine erfindungsgemäße Vorrichtung bzw. Anlage zur Durchführung des erfindungsgemäßen Verfahrens. Die Vorrichtung umfasst eine Schreddereinrichtung 10 zum Zerkleinern der Kunstharz- und Kohlenstofffasern-enthaltenden Abfälle A, wobei es sich auch nur um ein einzelnes Abfallteil handeln könnte. Ferner umfasst die Vorrichtung eine Pyrolyse- und/oder Vergasungseinrichtung 20 mit einer Pyrolysekammer 21, eine Verbrennungseinrichtung 30, sowie eine Stromerzeugungseinrichtung, die aus einem Stirlingmotor 40 und einem Generator 50 besteht, wobei der Generator 50 über die Welle 60 vom Stirlingmotor 40 angetrieben wird. Mit 70A und 70B sind aus der Pyrolysekammer 21 abführende Rohrleitungen bezeichnet. Nicht dargestellt ist eine Steuereinrichtung mit zugehörenden Sensoren und Stellmitteln. Die gezeigte Vorrichtung kann kontinuierlich oder auch diskontinuierlich betrieben werden.

Nachfolgend wird das erfindungsgemäße Verfahren erläutert. Mit A ist ein Kunstharz-und Kohlenstofffasern-enthaltendes Abfallteil bezeichnet. Das Abfallteil A wird in der Schreddereinrichtung 10 zerkleinert. Gegebenenfalls ist eine solche Zerkleinerung nicht erforderlich. Anschließend wird das geschredderte Abfallteil A (bzw. die erhaltenen Schredderstücke) in die Pyrolysekammer 21 der Pyrolyse- und/oder Vergasungseinrichtung 20 eingebracht, in welcher das enthaltene Kunstharz zumindest teilweise in eine gasförmige Phase G überführt wird.

Die gasförmige Phase G wird über eine abführende Rohrleitung 70A zu der Verbrennungseinrichtung 30 geleitet, in welcher diese einem Verbrennungsprozess zugeführt wird, um einen in der gasförmigen Phase G enthaltenen latenten Brennwert nutzbar zu machen. Das Abgas bzw. die Abgase G' aus diesem Verbrennungsprozess werden über die Rohrleitung 70B zu dem Stirlingmotor 40 weitergeleitet und sorgen dort in technisch bekannter Weise für dessen Antrieb, wobei die in den Abgasen enthaltene Wärme in mechanische Energie (Bewegungsenergie) umgesetzt wird, die über die Welle 60 zum Antrieb des Generators 50 genutzt wird, der die mechanische Energie in eine zwischen den Polklemmen 51 und 52 abgreifbare elektrische Energie umwandelt. Im Anschluss an den Stirlingmotor 40 kann das abströmende Abgas R optional einer Nachbehandlung unterzogen werden.

Gegebenenfalls kann auf die Verbrennung der gasförmigen Phase G verzichtet werden, wobei dann der Stirlingmotor 40 durch die enthaltene Wärme der im Pyrolyse- und/oder Vergasungsprozess gewonnenen gasförmigen Phase G angetrieben wird. Alternativ und/oder ergänzend zum Stirlingmotor 40 kann auch ein Thermoelement vorgesehen sein, welches die in der gasförmigen Phase G und/oder den Abgasen G' enthaltene Wärme zumindest teilweise unmittelbar in elektrische Energie umwandelt.

Mit 71 ist eine Ummantelung zur Isolation und/oder aktiven Beheizung der abführenden Rohrleitungen 70A und 70B bezeichnet, um einen Niederschlag bzw. eine Kondensation der gasförmigen Phase G und/oder der Abgase G', bzw. einzelner Bestandteile hiervon, zu verhindern, was anderweitig zu teerartigen Anlagerungen führen könnte, die aufwändige Reinigungsmaßnahmen erfordern würden. Die Verhinderung eines Niederschlags kann alternativ und/oder ergänzend auch durch eine entsprechende Regelung des Pyrolyse- und/oder Vergasungsprozesses bewerkstelligt werden. Um eine solche Regelung zu ermöglichen, ist eine Wärmekopplungseinrichtung 80 vorgesehen, die z. B. in ein Rohrleitungssystem mündet, welches die Pyrolysekammer 21 umgibt und durch welches zumindest ein Teil der Abgase G' (bzw. der gasförmigen Phase G) geleitet wird, um hierdurch den Pyrolyse- und/oder Vergasungsprozess entsprechend zu regeln oder aber auch um die zur Aufrechterhaltung eines stabilen Pyrolyse- und/oder Vergasungsprozesses erforderliche Wärmemenge extern zuzuführen.

Ferner fallen als Ergebnis des Pyrolyse- und/oder Vergasungsprozesses in der Pyrolyse- und/oder Vergasungseinrichtung 20 Kohlenstofffasern F an, die zu Recyclingzwecken genutzt werden können. Gegebenenfalls ist eine Aufbereitung der Kohlenstofffasern F erforderlich.

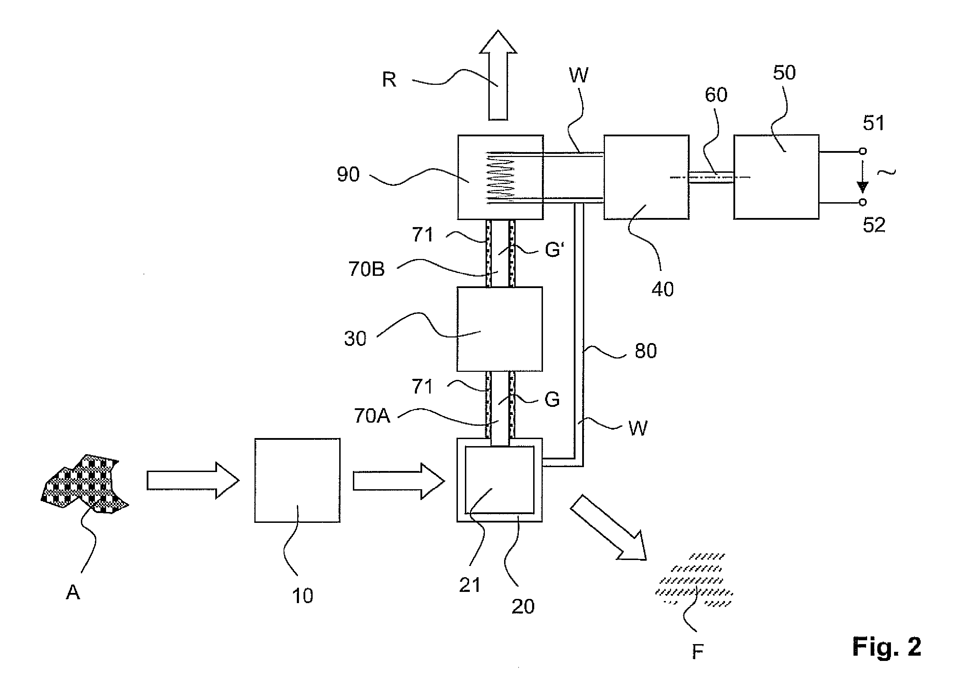

Im Zusammenhang mit **Fig. 2** wird nachfolgend ein zweites Ausführungsbeispiel der Erfindung erläutert, wobei nur auf die Unterschiede zum ersten Ausführungsbeispiel der Fig. 1 eingegangen wird. Abweichend zum Ausführungsbeispiel der Fig. 1 ist beim Ausführungsbeispiel der Fig. 2 eine Wärmetauscheinrichtung bzw. ein Wärmetauscher 90 vorgesehen, in dem die in der gasförmigen Phase G und/oder in den Abgasen G' enthaltene Wärme an ein Wärmetauschmedium W übertragen wird. Die Idee hierbei ist, die in der gasförmigen Phase G und/oder in den Abgasen G' enthaltene Wärme durch Übertragung an das Wärmetauschmedium W indirekt nutzbar zu machen und hierdurch einen Stirlingmotor 40 oder alternativ eine Turbine anzutreiben und die erzeugte mechanische Leistung mittels des Generators 50 in eine elektrische Leistung zu wandeln. Zur Verbesserung des Wirkungsgrads kann optional vorgesehen sein, das Wärmtauschmedium W zusätzlich aufzuheizen, was z. B. durch einen Gas- oder Ölbrenner erfolgen kann.

Die stabile Führung des Pyrolyse- und/oder Vergasungsprozesses kann wiederum durch eine Wärmekopplungseinrichtung 80 bewerkstelligt werden, die in diesem Ausführungsbeispiel beispielhaft mit dem durch den Wärmetauscher 90 aufgeheizten Wärmetauschmedium W betrieben wird. Durch eine entsprechende Regelung des Pyrolyse- und/oder Vergasungsprozesses in der Pyrolysekammer 21 kann auch eine Niederschlagsbildung in den abführenden Rohrleitungen 70A und 70B verhindert werden, wie bereits erläutert.

### Bezugszeichenliste

### Verfahren und Vorrichtung zur Weiterverwendung von Kunstharz- und Kohlenstofffasern-enthaltender Abfälle

- 10: Schreddereinrichtung
- 20: Pyrolyse- und/oder Vergasungseinrichtung
- 21: Pyrolysekammer
- 30: Verbrennungseinrichtung
- 40: Wandlereinrichtung, Stirlingmotor
- 50: Wandlereinrichtung, Generator
- 51: Polklemme
- 52: Polklemme
- 60: Welle
- 70 (A, B): abführende Rohrleitungen
- 80: Wärmekopplungseinrichtung
- 90: Wärmetauscheinrichtung (Wärmetauscher)
- A: Abfallteil(e)
- G: gasförmige Phase
- G': Abgas (aus verfeuerter gasförmiger Phase)
- R: Abgas, Rauchgas
- F: Kohlenstofffasern
- W: Wärmetauschmedium

## Patentansprüche

1. Verfahren zur Weiterverwendung von Kunstharz- und Kohlenstofffasern-enthaltender Abfälle (A),
**gekennzeichnet durch**
folgende Schritte:
- Zuführen der Abfälle (A) zu einem Pyrolyse- und/oder Vergasungsprozess, in dem das enthaltene Kunstharz zumindest teilweise in eine gasförmige Phase (G) überführt wird; und
- energetische Nutzung der gasförmigen Phase (G) zur Erzeugung von elektrischer Energie.

2. Verfahren nach Anspruch 1,
**dadurch gekennzeichnet, dass**
die im Pyrolyse- und/oder Vergasungsprozess gewonnene gasförmige Phase (G) zumindest teilweise einem Verbrennungsprozess zugeführt wird.

3. Verfahren nach Anspruch 1 oder 2,
**dadurch gekennzeichnet, dass**
die im Pyrolyse- und/oder Vergasungsprozess gewonnene gasförmige Phase (G) und/oder die Abgase (G') des Verbrennungsprozesses einer Wärmetauscheinrichtung (90) zugeführt werden, in der die in der gasförmigen Phase (G) und/oder in den Abgasen (G') enthaltene Wärme an ein Wärmetauschmedium (W) übertragen wird.

4. Verfahren nach einem der vorausgehenden Ansprüche,
**dadurch gekennzeichnet, dass**
die in der gasförmigen Phase (G) und/oder in den Abgasen (G') enthaltene Wärme, und insbesondere die an ein Wärmetauschmedium übertragene Wärme, zumindest teilweise zur Aufrechterhaltung und/oder zur Regelung des Pyrolyse- und/oder Vergasungsprozesses verwendet wird.

5. Verfahren nach einem der vorausgehenden Ansprüche,
**dadurch gekennzeichnet, dass**
die in der gasförmigen Phase (G) und/oder in den Abgasen (G') enthaltene Wärme, und insbesondere die an ein Wärmetauschmedium (W) übertragene Wärme, zumindest teilweise in elektrische Energie gewandelt wird.

6. Verfahren nach Anspruch 5,
**dadurch gekennzeichnet, dass**
die in der gasförmigen Phase (G) und/oder in den Abgasen (G') enthaltene Wärme, und insbesondere die an ein Wärmetauschmedium (W) übertragene Wärme, zum Antrieb eines Stirlingmotors (40) verwendet wird, der wiederum einen Generator (50) antreibt.

7. Verfahren nach einem der vorausgehenden Ansprüche,
**dadurch gekennzeichnet, dass**
der Pyrolyse- und/oder Vergasungsprozess stabil geführt wird und ein Niederschlag in den abführenden Rohrleitungen (70A, 70B) verhindert wird.

8. Verfahren nach einem der vorausgehenden Ansprüche,
**dadurch gekennzeichnet, dass**
die in den Abfällen (A) enthaltenen Kohlenstofffasern (F) rückgewonnen werden.

9. Verfahren nach einem der vorausgehenden Ansprüche,
**dadurch gekennzeichnet, dass**
es sich bei den Kunstharz- und Kohlenstofffasern-enthaltenden Abfällen (A) um CFK-Fahrzeugteile und insbesondere um CFK-Karosseriebauteile handelt, oder dass es sich um Reste handelt, die bei der Herstellung dieser CFK-Teile anfallen.

10. Vorrichtung zur Durchführung des erfindungsgemäßen Verfahrens, wenigstens umfassend: eine Einrichtung (20) zum Ausführen eines Pyrolyse- und/oder Vergasungsprozesses, und eine Einrichtung (40, 50) zur Erzeugung von elektrischer Energie unter energetischer Nutzung der im Pyrolyse- und/oder Vergasungsprozess gewonnenen gasförmigen Phase (G).
